(19) Europäisches Patentamt
European Patent Office
Office européen des brevets

(11) EP 0 542 072 B1

(12) EUROPÄISCHE PATENTSCHRIFT

(45) Veröffentlichungstag und Bekanntmachung des Hinweises auf die Patenterteilung:
**15.01.1997 Patentblatt 1997/03**

(51) Int Cl.[6]: **C08G 18/08**, C09J 175/04
// (C09J175/04, 161:06, 163:00)

(21) Anmeldenummer: **92118676.3**

(22) Anmeldetag: **31.10.1992**

# (54) Wässrige Polyurethandispersion

Aqueous polyurethane dispersion

Dispersion aqueuse de polyuréthane

(84) Benannte Vertragsstaaten:
**BE DE ES FR GB IT NL**

(30) Priorität: **15.11.1991 DE 4137661**

(43) Veröffentlichungstag der Anmeldung:
**19.05.1993 Patentblatt 1993/20**

(73) Patentinhaber: **BASF Aktiengesellschaft**
**67063 Ludwigshafen (DE)**

(72) Erfinder:
- **Wallon, Alexander, Dr.**
  **W-6733 Hassloch (DE)**
- **Maempel, Lothar, Dr.**
  **W-6835 Bruehl (DE)**
- **Auchter, Gerhard, Dr.**
  **W-6702 Bad Duerkheim (DE)**
- **Seibert, Horst**
  **W-6701 Fussgoenheim (DE)**

(56) Entgegenhaltungen:
**EP-A- 0 242 731**
**EP-A- 0 259 679**
**EP-A- 0 272 566**
**EP-A- 0 382 052**
**WO-A-90/06330**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 542 072 B1

Printed by Jouve, 75001 PARIS (FR)

## Beschreibung

Die Erfindung betrifft wäßrige Dispersionen, enthaltend ein Polyurethan und 5 bis 60 Gew.-%, bezogen auf das Polyurethan eines die Haftung verbessernden Polymeren, wobei das Polyurethan aufgebaut ist aus

(a) organischen Polyisocyanaten,

(b) Dihydroxylverbindungen mit einem Molekulargewicht über 500 bis 5000 g/mol, welche keine anionischen Gruppen oder in anionische Gruppen überführbare Gruppen enthalten

(c) Di- oder Monohydroxylverbindungen mit mindestens einer anionischen Gruppe oder in eine anionischen Gruppe überführbaren Gruppe

(d) gegebenenfalls weiteren von (c) verschiedenen Verbindungen mit ein oder zwei gegenüber Isocyanat reaktiven funktionellen Gruppen und mindestens einer anionischen Gruppe oder in eine anionische Gruppe überführbaren Gruppe

(e) gegebenenfalls Verbindungen mit mindestens zwei gegenüber Isocyanat reaktiven funktionellen Gruppen und einem Molgewicht von 60 bis 500 g/mol, welche keine anionische Gruppen oder in anionische Gruppen überführbare Gruppen enthalten

und das Polyurethan oder dessen Prepolymer in einem unter 100°C siedenden, mit Wasser mischbaren Lösungsmittel hergestellt und nach Zusatz eines die Haftung verbessernden Polymeren ausgewählt aus der Gruppe Phenol-Formaldehyd-Kondensationsharze, Epoxidharze, Polyvinylacetat, Polyvinylchlorid, Polymethylmethacrylat, Polyamide, Polyether, Polyester, Polyetherdiode, Polyesterdiode, Polyurethane und Phenacrylat in Wasser dispergiert wird und im Falle des Prepolymeren anschließend die weitere Umsetzung zum Polyurethan erfolgt.

Die WO-A-9 006 330 betrifft Abmischungen von Polyurethandispersionen mit wasserlöslichen reaktiven Melaminharz- oder Epoxidharzkondensaten und die Verwendung dieser Mischungen zum Beflocken von elastomeren Formkörpern sowie zum Heißversiegeln von textilen Flächengeweben. Die Polyurethane sind aufgebaut aus Polyisocyanaten, Dihydroxylverbindungen mit einem Molekulargewicht von 500 bis 6000 sowie Dihydroxycarbonsäuren. Das Polyurethan weist gegenüber reaktiven Melaminharz- oder Epoxidharzkondensaten reaktive Gruppen auf.

Die EP-A-0 259 679 betrifft ebenfalls Abmischungen von Polyurethandispersionen mit natürlichen oder synthetischen Harzen, z.B. Phenol- und Ketonharzen. Die Polyurethane weisen chemisch eingebaute Carboxylat- und/oder Sulfonatgruppen auf. Bei deren Herstellung werden anionische bzw. potentiell anionische Aufbaukomponenten wie Carboxyaltgruppen oder in Carboxylgruppen aufweisende Diole, ein Gemisch von mindestens zwei aliphatischen oder cycloaliphatischen Diisocyanaten und ausgewählte Polyesterdiole eingesetzt. Es wird empfohlen, diese Dispersionen als Klebstoffe zu verwenden.

Aus der deutschen Patentanmeldung 40 24 567 und der DE-A-39 03 538 sind emulgatorfreie Dispersionen für die Verwendung als Klebstoff bekannt, welche ein Polyurethan und weitere Polymere, z.B. ein Phenol-Formaldehydharz, zur Verbesserung der Haftungseigenschaften enthalten. Nach den in der DE-A- 39 03 538 beschriebenen Verfahren wird das Polyurethan in einem niedrigsiedenden, mit Wasser mischbaren Lösungsmittel hergestellt, anschließend das die Haftung verbessernde Polymer zugesetzt und erst danach das erhaltene Gemisch in Wasser dispergiert.

Auf diese Weise werden stabile wäßrige Dispersionen erhalten, in denen sich das zugesetzte Polymer mutmaßlich im Innern der Dispersionsteilchen befindet und von einer stabilisierenden Polyurethanschicht umhüllt wird. Insbesondere weisen diese Dispersionen bei der Verwendung als Klebstoffe eine gute Anfangshaftfestigkeit auf.

Nachteilig ist jedoch die noch zu hohe Viskosität der Dispersionen. Für die Verarbeitung sind generell hochkonzentrierte Dispersionen möglichst geringer Viskosität gewünscht, die gleichzeitig feinteilig sind und daher eine hohe Scherstabilität besitzen.

Aufgabe der vorliegenden Erfindung waren daher Dispersionen mit guten Klebeeigenschaften, welche eine möglichst geringe Viskosität aufweisen.

Demgemäß wurden die eingangs definierten Dispersionen, sowie ihre Verwendung als Klebstoff gefunden.

Bevorzugte Ausführungsformen der Erfindung sind den Unteransprüchen zu entnehmen.

Die erfindungsgemäßen emulgatorfreien Dispersionen enthalten ein Polyurethan und 5 bis 60 Gew.-% bevorzugt 10 bis 30 Gew.-%, bezogen auf das Polyurethan, eines die Haftung verbessernden Polymeren.

Das Polyurethan ist im wesentlichen, bevorzugt ausschließlich, aufgebaut aus den Komponenten (a) bis (e). Bei den gegenüber Isocyanat reaktiven funktionellen Gruppen handelt es sich um Hydroxyl-, primäre oder sekundäre Aminogruppen.

Als Polyisocyanate (a) sind insbesondere aliphatische, cycloaliphatische und aromatische Diisocyanate geeignet.

Vorzugsweise werden solche mit der allgemeinen Formel $X(NCO)_2$ eingesetzt, wobei X für einen aliphatischen Kohlenwasserstoffrest mit 4 bis 12 C-Atomen, einen cycloaliphatischen mit 6 bis 15 Atomen oder einen aromatischen Kohlenwasserstoffrest mit 6 bis 15 C-Atomen steht.

Geeignete aliphatische, cycloaliphatische und aromatische Diisocyanate sind z.B. 1,4-Butandiisocyanat, 1,6-Hexandiisocyanat, 2,2,4- und 2,4,4-Trimethylhexamethylendiisocyanat, Cyclohexandiisocyanat, Methylcyclohexandiisocyanat, Isophorondiisocanat, 4,4'-Diisocyanatodiphenylmethan, 4,4'-Diisocyanatodicyclohexylmethan, 2,4- und 2,6-Toluoldiisocyanat.

Es können auch Gemische der Diisocyanate eingesetzt werden. Insbesondere haben sich Gemische von aliphatischen bzw. cycloaliphatischen Diisocyanaten mit aromatischen Diisocyanten im Molverhältnis von 1:4 bis 5:1 als geeignet erwiesen.

Neben den Diisocyanaten können in untergeordneten Mengen auch Monoisocyanate zur Molekulargewichtsregulierung eingesetzt werden.

Geeignete Dihydroxylverbindungen (b) mit einem Molekulargewicht über 500 bis 5000 sind die bekannten Polyester, Polyether, Polythioether, Polylactone, Polyacetale, Polycarbonate und Polyesteramide mit 2 Hydroxylgruppen. Bevorzugt sind solche Dihydroxylverbindungen, deren Molekulargewicht zwischen 750 und 3000 liegt. Selbstverständliche können auch Gemische dieser Dihydroxylverbindungen eingesetzt werden.

Als Komponente (c) geeignet sind aliphatische, cycloaliphatische oder aromatische Mono- oder Dihydroxycarbonsäuren. Bevorzugt sind Dihydroxyalkylcarbonsäuren, insbesondere mit 3 bis 10 C-Atomen, wie sie auch in der US-A-3 412 054 beschrieben sind. Insbesondere bevorzugt sind Verbindungen der allgemeinen Formel

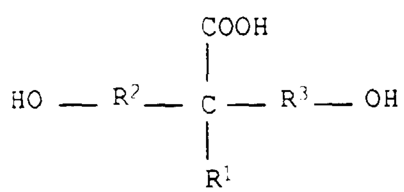

in welcher $R^1$ für ein Wasserstoffatom oder einen Alkylrest mit 1 - 4 Kohlenstoffatomen und $R^2$ sowie $R^3$ für eine $C_1$-$C_4$-Alkylengruppe stehen. Beispielsweise genannt sei 2,2-Dimethylolpropionsäure.

Als Aufbaukomponenten (d) können von (c) verschiedene Verbindungen mit ein oder zwei gegenüber Isocyanat reaktiven Aminogruppen und mindestens einer anionischen Gruppe oder in eine anionische Gruppe überführbare Gruppe eingesetzt werden. Bei in anionische Gruppen überführbare Gruppen handelt es sich üblicherweise um Carbonsäure- und Sulfonsäuregruppen. Erwähnenswert sind Aminocarbonsäuren oder Aminosulfonsäuren z.B. Lysin, β-Alanin, N-(2-Aminoethyl)-2-aminoethansulfonsäure und die in der DE-A-20 34 479 genannten Addukte von aliphatischen diprimären Diaminen an α-olefinische Carbonsäuren, z.B. das Addukt von Ethylendiamin an Acrylsäure.

Sowohl Aufbaukomponente (c) als auch (d) enthalten Ionengruppen bzw. in Ionengruppen überführbare Gruppen, um die Dispergierbarkeit des Polyurethans in Wasser zu gewährleisten.

Zur Überführung von potentiellen anionischen Gruppen, z.B. Carbonsäuregruppen oder Sulfonsäuregruppen in Ionengruppen können anorganische und/oder organische Basen wie Natriumhydroxid, Kaliumhydroxid, Kaliumcarbonat, Natriumhydrogencarbonat, Ammoniak oder primäre, sekundäre und besonders tertiäre Amine, z.B. Triethylamin oder Dimethylaminopropanol eingesetzt werden.

Die Neutralisation der potentiell anionischen Gruppen kann vor, während, jedoch vorzugsweise nach der Isocyanat-Polyadditionsreaktion erfolgen.

Als weitere emulgierend wirkende Aufbaukomponenten können gegebenenfalls auch nichtionische Emulgatoren wie z. B. einwertige Polyetheralkohole des Molgewichtsbereiches 500 bis 10 000 g/mol, vorzugsweise von 1 000 bis 5 000 g/mol mitverwendet werden. Einwertige Polyetheralkohole sind durch Alkoxylierung von einwertigen Startermolekülen, wie beispielsweise Methanol, Ethanol oder n-Butanol erhältlich, wobei als Alkoxylierungsmittel Ethylenoxid oder Gemische von Ethylenoxid mit anderen Alkylenoxiden, besonders Propylenoxid eingesetzt werden. Im Falle der Verwendung von Alkylenoxidgemischen enthalten diese jedoch vorzugsweise mindestens 40, besonders bevorzugt mindestens 65 Mol-% Ethylenoxid.

Der Zusatz solcher nichtionischer Emulgatoren ist jedoch aufgrund des Gehalts an Aufbaukomponenten c) und gegebenenfalls d) im allgemeinen nicht notwendig.

Aufbaukomponenten (e) sind im wesentlichen Verbindungen, welche zwei Hydroxylgruppen, zwei Aminogruppen oder eine Hydroxyl- und eine Aminogruppe enthalten. In Betracht kommen z.B. Dihydroxylverbindungen, wie Propandiol-(1,3), Butandiol-(1,4), Diamine wie Ethylendiamin, Hexamethylendiamin, Piperazin, 2,5-Dimethylpiperazin, 1-Amino-3-aminomethyl-3,5,5-trimethyl-cyclohexan (Isophorondiamin), 4,4'-Diaminodicyclohexylmethan, 2,4-Diamino-cyclohexan, 1,2-Diamino-propan, Hyrazin oder Aminoalkohole wie Ethanolamin, Isopropanolamin, Methylethanolamin oder Aminoethoxyethanol. Auch Verbindungen (e) mit mehr als 2 gegenüber Isocyanat reaktiven Gruppen können eingesetzt werden.

Die Anteile der Komponenten a) bis e) werden insbesondere so gewählt, daß die Summe der gegenüber Isocyanat reaktiven funktionellen Gruppen, wobei es sich im allgemeinen um Hydroxyl- oder Aminogruppen handelt, 0,9 bis 1,1 bevorzugt 0,95 bis 1,05 Grammäquivalente gegenüber 1 Grammäquivalent Isocyanat beträgt.

Besonders bevorzugt entsprechen die gegenüber Isocyanat reaktiven funktionellen Gruppen in ihrer Anzahl den Isocyanatgruppen.

Der Anteil der einzelnen Komponenten bezogen auf 1 Grammäquivalent Isocyanat beträgt insbesondere

| | |
|---|---|
| 0,15-0,8, | bevorzugt 0,3-0,6 Grammäquivalente der Komponenten (b) |
| 0,03-0,4, | bevorzugt 0,05-0,4 Grammäquivalente der Komponenten (c) |
| 0-0,4, | bevorzugt 0-0,3 Grammäquivalente der Komponenten (d) |
| 0-0,8, | bevorzugt 0-0,6 Grammäquivalente der Komponenten (e) |

Zur Herstellung des Polyurethans können die Aufbaukomponenten (a) bis (e) in einem niedrig siedenden, mit Wasser mischbaren organischen Lösungsmittel in bekannter Weise umgesetzt werden, wie es z.B. auch in der DE-A-34 37 918 beschrieben ist.

Als Lösungsmittel sind z.B. Tetrahydrofuran, Methylethylketon, N-Methylpyrrolidon und insbesondere Aceton empfehlenswert.

Die Reaktionstemperatur liegt vorzugsweise bei 50 bis 100°C.

Zur Beschleunigung der Reaktion der Diisocyanate können übliche und bekannte Katalysatoren, wie Dibutylzinndilaurat, Zinn-II-octoat oder 1,4-Diazabicyclo-(2,2,2)-octan, mitverwendet werden.

Das erhaltene Polyurethan, welches im wesentlichen frei von Isocyanatgruppen ist, wird dann nach Zusatz des haftungsverbessernden Polymeren in Wasser dispergiert und das organische Lösungsmittel durch Destillation im gewünschten Ausmaß, im allgemeinen vollständig, entfernt.

Die Herstellung des Polyurethans kann auch in der Weise erfolgen, daß in dem niedrig siedenden mit Wasser mischbaren organischen Lösungsmittel zunächst ein Polyurethanprepolymer hergestellt wird. Insbesondere werden dazu zumindest die Aufbaukomponenten (a) und (b) und Teile von c) miteinander umgesetzt. Nach Zusatz des haftungsverbessernden Polymeren wird das erhaltene Polyurethanprepolymer, welches noch Isocyanatgruppen enthält, in Wasser dispergiert. Danach kann die weitere Umsetzung insbesondere mit den weiteren Aufbaukomponenten erfolgen. Anschließend kann, wie bereits oben beschrieben, das organische Lösungsmittel entfernt werden.

Als haftungsverbessernde Polymere kommen eine Vielzahl von unterschiedlichen Polykondensaten, radikalisch polymerisierten Polymeren oder Polyaddukten in Betracht.

Bevorzugt handelt es sich beim haftungsverbessernden Polymer Phenol-Formaldehyd-Kondensationsharze, insbesondere solche mit Molgewichten (Gewichtsmittel $\overline{M}_w$) zwischen 500 und 2000 sowie Erweichungstemperaturen im Bereich zwischen 80 und 130°C. Besonders bevorzugt handelt es sich bei den Phenol-Formaldehyd-Kondensationsharzen um Novolacke, wie sie durch sauer katalysierte Umsetzung von Phenolen, insbesondere Phenol oder durch $C_1$ bis $C_{10}$-Alkylgruppen substituierte Phenole, mit Formaldehyd erhältlich sind. Insbesondere werden bei der Umsetzung 1,05 bis 1,3 Mol Phenole pro Mol Formaldehyd eingesetzt.

Insbesondere eignen sich auch Epoxidharze, vorzugsweise Umsetzungsprodukte von Epoxiden wie Epichlorhydrin mit Bisphenol A; bevorzugt sind solche mit Molgewichten (Gewichtsmittel $\overline{M}_w$) zwischen 500 und 5000 und Erweichungstemperaturen im Bereich zwischen 80 und 130°C.

Ferner kommen als haftungsverbessernde Polymere auch Polyvinylacetat, Polyvinylchlorid, Polymethylmethacrylat, Polyamide, Polyether, Polyester, Polyetherdiole, Polyesterdiole, Polyurethane, insbesondere salzgruppenfreien Polyurethane, und Phenacrylat in Betracht.

Als Polyvinylacetate werden die Homopolymerisate des Vinylacetates bevorzugt. Einsetzbar sind auch seine Copolymerisate, die bis zu 10 Gew.-% Comonomere wie Vinyllaurat, Vinylstearat oder bevorzugt (Meth)acrysäure-, Fumarsäure- oder Maleinsäureester mit $C_1$- bis $C_8$-Alkanolen wie Methanol, n-Butanol oder 2-Ethylhexanol enthalten. Die Polymerisate weisen üblicherweise einen K-Wert, gemessen bei 25°C in Cyclohexanon nach DIN 53 726, von 45 bis 60 auf. Unter Polyvinylchlorid werden im allgemeinen die Homopolymerisate des Vinylchlorids und seine Copolymerisate, die bis zu 10 Gew.-% an Comonomeren wie Ethylen oder Vinylacetat enthalten, verstanden. Ihr K-Wert (25°C, Cyclohexanon, DIN 53 726) sollte zwischen 45 und 55 liegen. Als Polymethacrylat setzt der Fachmann üblicherweise Homopolymerisate des Methylacrylats oder seine Copolymerisate mit bis zu 10 Gew.-%, bezogen auf das Copolymerisat, an Vinylacetat, Acrylsäureestrn von $C_1$- bis $C_8$-Alkanolen oder Methacrylsäureestern mit $C_2$- bis $C_8$-Alkanolen ein. Ihr Schmelzindex MFI, bestimmt nach DIN 53 735 (230°C/3,8 kg) liegt im allgemeinen zwischen 0,1

und 3,0. Die Herstellung dieser Polymerisate erfolgt im allgemeinen durch radikalische Polymerisation der ethylenisch ungesättigten Monomeren zwischen 30 und 150°C in Substanz, Lösung oder Emulsion mit anschließender Trocknung. Solche Polymerisate sind allgemein bekannt, z.B. aus Houben-Weyl, Methoden der organischen Chemie, Band E20, 1987, Seiten 1115-1125, 1041-1062 und 1141-1174.

Geeignete Polyamide haben eine K-Wert von 65 bis 80, gemessen in $H_2SO_4$ bei 25°C nach DIN 53 727. Es handelt sich üblicherweise um Polymere, die sich von Lactamen mit 7 bis 13 Ringgliedern wie ε-Caprolactam, ε-Capryllactam oder ε-Laurinlactam ableiten, beispielsweise wie Polycaprolactam (PA6), sowie um Polyamide, die durch Umsetzen von Dicarbonsäuren mit Diaminen erhalten werden. Beispiele hierfür sind Polyhexamethylenadipinamid (PA66), Polyhexamethylensebacinamid (PA610) oder Polyhexamethylendodecanamid (PA612). Geeignete Dicarbonsäuren sind beispielsweise Alkandicarbonsäuren mit 4 bis 12, insbesondere 6 bis 10 Kohlenstoffatomen sowie Phthalsäure, Terephthalsäure und Isophthalsäure sowie beliebige Mischungen dieser Säuren. Als Diamine seien beispielsweise Alkandiamine mit 4 bis 12, insbesondere 4 bis 8 Kohlenstoffatomen, ferner m-Xylylendiamin, p-Xylylendiamin, deren hydrierte Derivate, Bis-(4-aminophenyl)methan, Bis-(4-aminocyclohexyl)methan oder Bis(4-aminophenyl)propan-2,2 oder deren Mischungen genannt. Aufgrund der guten Löslichkeit werden Copolymere bevorzugt, beispielsweise ein Copolyamid aus 30 bis 40 Gew.-% Adipinsäure, 15 bis 20 Gew.-% Hexamethylendiamin, 30 bis 35 Gew.-% und 15 bis 20 Gew.-% ε-Caprolactam bzw. ε-Aminocapronsäure. Die Herstellung dieser bekannten Polymeren ist allgemeines Fachwissen, s. beispielsweise Römpp, Chemielexikon, 8. Auflage, Seiten 2861, 3058 und 3267 oder EP-A-129 195 und EP-A-129 196.

Die Polyetherdiole sind an sich bekannt, beispielsweise aus Kunststoff-Handbuch Bd. 7 (1983) Seiten 42 bis 54. Genannt seien Polyethylenoxid, Polypropylenoxid oder Polytetrahydrofuran oder deren Copolymere mit zwei endständigen Hydroxylgruppen. Sie werden in bekannter Weise hergestellt durch im allgemeinen anionische Polyaddition, s. beispielsweise N.G. Gaylord, High Polymers, Bd. 13, New York 1963, Part I. Untergeordnete Bedeutung haben Polyetherole, die zur Reaktivitätserhöhung mit Ethylenoxid gepfropft sind. Die Polyetherdiole haben im allgemeinen ein Molekulargewicht von 300 bis 3000, was einem K-Wert in DMF bei 25° nach DIN 53 726 vom 25 bis 60 entspricht. Bevorzugte Molekulargewichte liegen zwischen 800 und 2200, entsprechend einem K-Wert von 20 bis 50.

Als Polyether verwendet man beispielsweise Polyethylenoxid, Polypropylenoxid oder Polytetrahydrofuran. Die Polyether weisen üblicherweise einen K-Wert in DMF bei 25°C nach DIN 53 726 von 20 bis 50 auf. Sie sind allgemein bekannt z.B. aus Encyclopedia of Polymer Science and Technology, Band 6, 1967, Seite 103 und folgende, Band 9, 1968, Seite 668 und folgende und Band 13, 1970, Seite 670 und folgende.

Als Polyester werden monomerfreie ungesättigte Polyesterharze bevorzugt. Diese sind bekannte Kondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind, und ggf. zusätzliche Reste einwertiger Carbonsäuren oder einwertiger Alkohole enthalten. Als Ausgangsstoff seien genannt: Maleinsäure, Fumarsäure, Phthalsäure, Isophthalsäure, Terephthalsäure, Maleinsäureanhydrid, Phthalsäureanhydrid, Isophthalsäureanhydrid, Ethylenglykol, Propylenglykol, Butandiol-1,4 oder Neopentylglykol. Untergeordnete Bedeutung im Sinne der Erfindung haben solche Harze, die durch Cokondensation von Bisphenol A, Epichlorhydrin-bisphenol A Kondensaten und Methacrylsäure hergestellt werden. Monomerfrei in diesem Zusammenhang bedeutet, daß diese sogenannten UP-Harze nicht in zur Vernetzung geeigneten Monomeren wie Styrol gelöst sind. Die Produkte haben üblicherweise eine Viskosität bei 150°C von 1000 bis 6000 mPa·s, insbesondere 2000 bis 4000 mPa·s.

Als Polyesterdiole sind Kondensationsprodukte, die zwei endständige OH-Gruppen aufweisen, aus Dicarbonsäuren wie Adipinsäure oder Isophthalsäure mit Diolen wie beispielsweise Butandiol-(1,4), Hexandiol-(1,6) oder Neopentylglykol, geeignet.

Der Molekulargewichtsbereich der einsetzbaren Polyesterdiole liegt im allgemeinen zwischen 300 und 5000. Bevorzugt wird ein Molekulargewicht zwischen 800 und 2500, entsprechend einem K-Wert in DMF bei 25°C nach DIN 53 276 von 30 bis 55. Diese Polymeren und ihre Herstellung sind allgemein bekannt aus Kunststoff-Handbuch Bd. 7 (1983) Seiten 54 bis 62 und DE 1 268 842.

Salzgruppenfreie Polyurethane sind bekannte Additionspolymere auf Basis von Polyether- oder Polyesterdiolen, Isocyanaten wie Hexamethylendiisocyanat, 2,4-Diisocyanatodiphenylmethan und eventuell bi- oder trifunktionellen Kettenverlängerern, die noch üblichen Verfahren (Kunststoff-Handbuch, Karl-Hanser-Verlag, Band 7, (1966) hergestellt werden. Bevorzugt werden niedermolekulare Kondensate (K-Wert in DMF bei 25°C nach DIN 53 726 zwischen 25 und 60) eingesetzt. Vernetzte Polyurethane haben untergeordnete Bedeutung.

Phenacrylate werden bevorzugt durch Addition von mit Acrylsäure oder Methacrylsäure veresterten Bisphenol A Glycidethern mit Terephthalsäure hergestellt. Ebenso können Phenacrylate auf Basis von epoxydierten Novolaken eingesetzt werden. Die K-Werte der Polymerisate liegen im allgemeinen zwischen 30 und 55 (in Cyclohexan bei 25°C nach DIN 53 726).

Das haftungsverbessernde Polymer wird dem Polyurethan bzw. dessen Prepolymer, welche in einem niedrig siedenden mit Wasser mischbaren Lösungsmitel vorliegen, vor der Dispergierung in Wasser, d. h. vor der Herstellung der wäßrigen, erfindungsgemäßen Dispersion mit einer wäßrigen kontinuierlichen Phase zugesetzt. Prinzipiell kann

das Harz auch zu einem beliebigen Zeitpunkt zu der Reaktionsmischung der Ausgangskomponente des Polyurethans gegeben werden. Besonders vorteilhaft ist jedoch, das Harz erst dann zuzumischen, wenn der Prepolymeraufbau bereits fortgeschritten ist und der NCO-Gehalt des Prepolymeren einen Wert von weniger als 1,5 Gew.-% erreicht hat. Insbesondere im Fall von Harzen mit gegenüber Isocyanaten besonders reaktiven Gruppen, wie z.B. Novolaken, sollten die Harze nur in PUR mit einem NCO-Gehalt nahe 0 Gew.-% eingearbeitet werden. Das Polymer kann als solches oder auch als Lösung zugesetzt werden. Als Lösungsmittel für das Polymer sind neben Wasser (z.B. bei Phenol-Formaldehyd-Harzen) insbesondere ebenfalls niedrig siedende, mit Wasser mischbare organische Lösungsmittel geeignet.

Die schließlich nach der Dispergierung des Gemisches in Wasser, gegebenenfalls Umsetzung des Polyurethanprepolymeren zum Polyurethan und gegebenenfalls Abdestillation des organischen Lösungsmittels erhaltene, erfindungsgemäße Dispersion, weist bevorzugt einen Feststoffgehalt von 10 bis 70 Gew.-%, insbesonere 20 bis 50 Gew.-% auf.

Die erfindungsgemäßen Dispersionen können unmittelbar zum Verkleben verschiedenster Substrate, z.B. von Holz, Kunststoff, Glas und Metall verwendet werden. Zur Erzielung spezieller Eigenschaften können den Dispersionen weitere Zusatzstoffe wie Weichmacher, Filmbildehilfsmittel, Füllstoffe etc. zugesetzt werden.

Die Dispersionen zeichnen sich bei guten Klebeeigenschaften, insbesondere einer guten Anfangshaftfestigkeit durch ihre geringe Viskosität aus. Im allgemeinen kann die Viskosität einer Dispersion auch erniedrigt werden, wenn bei gleichem Feststoffgehalt größere Teilchendurchmesser eingestellt werden (O. Lorenz, G. Rose Colloid Polym. Sci. 260 (1982) 1079). Bei größeren dispersen Teilchen besteht jedoch insbesondere bei Einwirkung von Scherkräften die Gefahr der Koagulation

Überraschenderweise sind die erfindungsgemäßen Dispersionen sogar noch gegenüber Dispersionen mit größeren Teilchengrößen weniger viskos.

Beispiele

Die Viskositäten der Dispersionen wurden bei einer Schergeschwindigkeit von $100 s^{-1}$ mit einem Rotations-Rheometer mit konzentrischen Zylindern (Spindeldurchmesser 38,7 mm, Becherdurchmesser: 42,0 mm vermessen.

Die Teilchengröße der Latexpartikel wurde indirekt über Trübungsmessungen bestimmt. Hierzu wurde die Trübung einer Dispersion mit einem Feststoffgehalt von 0,01 Gew.-% relativ zu dest. Wasser bei einer Schichtdicke von 2,5 cm und bei Raumtemperatur bestimmt.

$$LD = \frac{\text{Intensität}_{Disp.} \times 100}{\text{Intensität}_{Wasser}}$$

Die in den nachfolgenden Beispielen verwendeten Symbole haben die nachstehend wiedergegebenen Bedeutungen:

| | |
|---|---|
| ADS = | Adipinsäure |
| B14 = | 1,4-Butandiol |
| TDI = | Toluylendiisocyanat |
| HDI = | Hexamethylendiisocyanat |
| PUD = | Na-Salz des Michael-Addukts aus Acrylsäure und Ethylendiamin |
| DBTL = | Dibutylzinndilaurat |
| DMPA = | Dimethylolpropionsäure |

Vergleichsbeispiel 1

Der Mischung aus entwässertem Polyesterol, Aceton I und Katalysator wurde TDI zugegeben. Nach einer Stunde Reaktionszeit bei 65°C wurde HDI zugesetzt und die Umsetzung weitere 90 min fortgesetzt. Nach Zulauf von Aceton II hatte die Reaktionsmischung einen NCO-Gehalt von 0,69 %.

Bei 50°C wurde mit PUD-Salz, das als 40 %ige Lösung in Wasser vorlag, kettenverlängert. Nach 5 Minuten wurde die Harzlösung, hergestellt aus Aceton III und Epikote 1001, zugesetzt und weitere 5 Minuten bei 50°C gerührt. Anschließend wurde mit Wasser dispergiert und das Aceton abdestilliert.

| Ausgangsprodukte | | |
|---|---|---|
| | Molmenge [mmol] | Gew.-Teile [g] |
| Polyesterdiol ADS/B14 (OH-Z. = 45,2) | 199 | 493 |
| TDI | 148 | 25,8 |
| HDI | 149 | 25,0 |
| DBTL | | 0,1 |
| Aceton I | | 133 |
| Aceton II | | 532 |
| Epikote 1001 (Kondensationsharz aus Biphenol A und Epichlorhydrin, $M_W$ etwa 450-500) | | 240 |
| Aceton III | | 240 |
| PUD-Salz (40 %ig) | 95 | 41,0 |
| entionisiertes Wasser | | 1200 |

Vergleichsbeispiel 2

Der Mischung aus entwässertem Polyesterol, 1,4-Butandiol, Aceton I und Katalysator wurde das TDI zugegeben. Nach einer Stunde Reaktionszeit bei 65°C wurde das HDI zugesetzt und die Umsetzung weitere 90 min fortgesetzt. Nach Zulauf von Aceton II hatte die Reaktionsmischung einen NCO-Gehalt von 0,63 %.

Bei 50°C wurde mit PUD-Salz, das als 40 %ige Lösung in Wasser vorliegt, kettenverlängert. Nach 5 Minuten wurde die Harzlösung, hergestellt aus Aceton III und einem Polyesterol, zugesetzt und weitere 5 Minuten bei 50°C gerührt. Anschließend wurde mit Wasser dispergiert und das Aceton abdestilliert.

| Ausgangsprodukte | | |
|---|---|---|
| | Molmenge [mmol] | Gew.-Teile [g] |
| Polyesterdiol ADS/B14 (OH-Z. = 45,0) | 193 | 482 |
| 1,4-Dihydroxybutan | 58 | 5,2 |
| TDI | 169 | 29,4 |
| HDI | 169 | 28,3 |
| Aceton I | | 133 |
| Aceton II | | 533 |
| Polyesterdiol ADS/B14 (OH-Z. = 45,0) | | 240 |
| Aceton III | | 240 |
| PUD-Salz (40 %ig) | 86 | 37,5 |
| entionisiertes Wasser | | 1200 |

Vergleichsbeispiel 3

Der Mischung aus entwässertem Polytetramethylenoxid, 1,4-Butandiol, Aceton I und Katalysator wurde das TDI zugegeben. Nach einer Stunde Reaktionszeit bei 65°C wurde das HDI zugesetzt und die Umsetzung weitere 90 min fortgesetzt. Nach Zulauf von Aceton II hatte die Reaktionsmischung einen NCO-Gehalt von 0,70 %.

Bei 50°C wurde mit PUD-Salz, das als 40 %ige Lösung in Wasser vorlag, kettenverlängert. Nach 5 Minuten wurde die Harzlösung, hergestellt aus Aceton III und Epikote 1007, zugesetzt und weitere 5 Minuten bei 50°C gerührt. Anschließend wurde mit Wasser dispergiert und das Aceton abdestilliert.

| | Molmenge [mmol] | Gew.-Teile [g] |
|---|---|---|
| Polytetramethylenoxid (OH-Z. = 45,0) | 213 | 435 |
| 1,4-Butandiol | 213 | 19,2 |
| TDI | 260 | 45,3 |
| HDI | 260 | 43,8 |
| Aceton I | | 132 |
| Aceton II | | 532 |
| Epikote 1007 (Kondensationsharz aus Bisphenol A und Epichlorhydrin, $M_N$ etwa 1550-2000) | | 240 |
| Aceton III | | 240 |
| PUD-Salz (40 %ig) | 94 | 41,0 |
| Entionisiertes Wasser | | 1200 |

Beispiel 1

Der Mischung aus entwässertem Polyesterol, DMPA, Aceton I und Katalysator wurde das TDI zugegeben. Nach einer Stunde Reaktionszeit bei 65°C wurde das HDI zugesetzt und die Umsetzung weitere 90 min fortgesetzt. Nach Zulauf von Aceton II hatte die Reaktionsmischung einen NCO-Gehalt von 0,65 %.

Bei 50°C wurde mit PUD-Salz, das als 40 %ige Lösung in Wasser vorlag, kettenverlängert. Nach 5 Minuten wurde die Harzlösung, hergestellt aus Aceton III und Epikote 1001, zugesetzt und 5 Minuten bei 50°C gerührt. Anschließend wurde mit Wasser dispergiert und das Aceton abdestilliert.

| Ausgangsstoffe: | | |
|---|---|---|
| | Molmenge [mmol] | Gew.-Teile [g] |
| Polyesterdiol ADS/B14 (OH-Z. = 45,2) | 194 | 481 |
| DMPA | 56 | 7,4 |
| TDI | 164 | 28,6 |
| HDI | 167 | 28,1 |
| DBTL | | 0,1 |
| Aceton I | | 133 |
| Aceton II | | 533 |
| PUD-Salz (40 %ig) | 84 | 36,8 |
| Aceton III | | 240 |
| Epikote 1007 (Kondensationsharz aus Bisphenol A und Epichlorhydrin, $M_W$ etwa 1550-2000) | | 240 |
| entionisiertes Wasser | | 1200 |

Beispiel 2

Verfahrensweise:

Der Mischung aus entwässertem Polyesterol, 1,4-Butandiol, DMPA, Aceton I und Katalysator wurde das TDI zugegeben. Nach einer Stunde Reaktionszeit bei 65°C wurde das HDI zugesetzt und weitere 90 Minuten umgesetzt. Nach Zulauf von Aceton II hatte die Reaktionsmischung einen NCO-Gehalt von 0,60 %. Die Reaktionsmischung wurde auf 30°C abgekühlt und mit der Harzlösung, hergestellt aus Lupraphen VP 9186 und Aceton III, vermischt. Anschließend wurde mit 30 %iger NaOH-Lösung neutralisiert, mit entionisiertem Wasser dispergiert und das Aceton abdestilliert.

| Einsatzstoffe | | |
|---|---|---|
| Polyesterdiol ADS/B14 (OH-Z. = 45,0) | 166 | 414 |
| DMPA | 250 | 33,5 |
| TDI | 273 | 47,6 |
| HDI | 273 | 45,9 |
| DBTL | | 0,1 |
| Aceton I | | 134 |
| | | |
| Aceton II | | 534 |
| Polyesterharz | | 240 |
| Lupraphen VP 9186 | | |
| Polyesterdiol ADS/B14, (OH-Zahl = 47) | | 240 |
| Aceton III | | |
| NaOH-Lösung (30 %ig) | 187 | 25,0 |
| entionisiertes Wasser | | 1200 |

Beispiel 3

Der Mischung aus entwässertem Polytetramethylenoxid 1,4-Butandiol, DMPA, Aceton I und Katalysator wird das TDI zugegeben. Nach einer Stunde Reaktionszeit bei 65°C wurde das HDI zugesetzt und weitere 90 Minuten umgesetzt. Nach Zulauf von Aceton II hatte die Reaktionsmischung einen NCO-Gehalt von 0,60 %. Die Reaktionsmischung wurde auf 30°C abgekühlt und mit der Harzlösung, hergestellt aus Epikote 1007 und Aceton III, vermischt. Anschließend wurde mit 30 %iger NaOH-Lösung neutralisiert, mit entionisiertem Wasser dispergiert und das Aceton abdestilliert.

| | Molmenge [mmol] | Gew.-Teile [g] |
|---|---|---|
| Polytetramethylenoxid (OH-Z.= 45,0) | 191 | 390 |
| DMPA | 239 | 32,1 |
| 1,4-Dihydroxybutan | 191 | 17,3 |
| TDI | 351 | 61,2 |
| HDI | 351 | 59,1 |
| DBTL | | 0,1 |
| Aceton I | | 137 |
| | | |
| Aceton II | | 548 |
| Epikote 1007 (Kondensationsharz aus Biphenol A und Epichlorhydrin, $M_W$ etwo 1550-2000) | | 240 |
| Aceton III | | 240 |
| NaOH-Lösung (30 %ig) | 168 | 22,3 |
| entionisiertes Wasser | | 1200 |

Beispiel 4

Der Mischung aus entwässertem Polyesterol, 1,4-Butandiol, DMPA, Aceton I und Katalysator wurde das TDI zugegeben. Nach einer Stunde Reaktionszeit bei 65°C wurde das HDI zugesetzt und weitere 90 Minuten umgesetzt. Nach Zulauf von Aceton II hatte die Reaktionsmischung einen NCO-Gehalt von 0,65 %. Die Reaktionsmischung wurde auf 30°C abgekühlt und mit der Harzlösung, hergestellt aus Epikote 1007 und Aceton III, vermischt. Anschließend wurde mit 30 %iger NaOH-Lösung neutralisiert, mit entionisiertem Wasser dispergiert und das Aceton abdestilliert.

Ausgangsstoffe

| | Molmenge [mmol] | Gew.-Teile [g] |
|---|---|---|
| Polyesterdiol ADS/B14 (OH-Z. = 45,0) | 168 | 419 |
| DMPA | 235 | 31,5 |
| 1,4-Butandiol | 50 | 4,5 |
| TDI | 267 | 46,5 |
| HDI | 267 | 44,9 |
| DBTL | | 0,1 |
| Aceton I | | 134 |
| Aceton II | | 534 |
| Epikote 1007 (Kondensationsharz aus Bisphenol A und Epichlorhydrin, $M_w$ etwa 1550-2000) | | 240 |
| Aceton III | | 240 |
| NaOH-Lösung (30 %ig) | 176 | 23,5 |
| entionisiertes Wasser | | 1200 |

Beispiel 5

Der Mischung aus entwässertem Polyesterdiol, DMPA, Butandiol-1,4, Aceton I und Katalysator wurde das TDI zugegeben. Nach einer Stunde Reaktionszeit bei 65°C wurde das HDI zugesetzt und die Umsetzung weitere 90 min fortgesetzt. Nach Zulauf von Aceton II hatte die Reaktionsmischung einen NCO-Gehalt von 0,61 %.

Bei 50°C wurde mit PUD-Salz, das als 40 %ige Lösung in Wasser vorliegt, kettenverlängert. Nach 5 Minuten wurde die Harzlösung, hergestellt aus Aceton III und Kondensat aus Phenol und Formaldehyd, zugesetzt und 5 Minuten bei 50°C gerührt. Anschließend wurde mit Wasser dispergiert und das Aceton abdestilliert.

| | Molmenge [mmol] | Gew.-Teile [g] |
|---|---|---|
| Polyesterdiol ADS/B14 (OH-Z. = 45,0) | 192 | 477 |
| 1,4-Butandiol | 57 | 5,2 |
| DMPA | 31 | 4,2 |
| TDI | 177 | 30,8 |
| HDI | 177 | 29,7 |
| DBTL | | 0,1 |
| Aceton I | | 133 |
| Aceton II | | 531 |
| PUD-Salz (40 %ig) | 73 | 31,9 |
| Phenol-Formaldehyd Kondensat, $M_w$= etwa 1000-1600, Erweichungstemperatur = 85-105°C | | 240 |
| Aceton III | | 240 |
| entionisiertes Wasser | | 1200 |

Beispiel 6

Der Mischung aus entwässertem Polyesterol, 1,4-Butandiol, DMPA, Aceton I und Katalysator wurde das TDI zugegeben. Nach einer Stunde Reaktionszeit bei 65°C wurde das HDI zugesetzt und weitere 90 Minuten umgesetzt. Nach Zulauf von Aceton II hatte die Reaktionsmischung einen NCO-Gehalt von 0,63 %. Die Reaktionsmischung wurde auf 30°C abgekühlt und mit der Harzlösung, hergestellt aus Polyurethan und Aceton III, vermischt. Anschließend wurde mit 30 %iger NaOH-Lösung neutralisiert, mit entionisiertem Wasser dispergiert und das Aceton abdestilliert.

| Ausgangsstoffe | | |
|---|---|---|
| | Molmenge [mmol] | Gew.-Teile [g] |
| Polyesterdiol ADS/B14 (OH-Z. = 45,0) | 226 | 564 |
| 1,4-Butandiol | 68 | 6,1 |
| DMPA | 235 | 31,5 |
| TDI | 305 | 53,1 |
| HDI | 305 | 51,3 |
| DBTL | | 0,1 |
| Aceton I | | 173 |
| Aceton II | | 690 |
| Polyurethan (Kondensationsprodukt aus Roh-MDI und Polypropylendiol, K-Wert in DMF bei 25°C: 46) | | 80 |
| Aceton III | | 80 |
| NaOH-Lösung (30 %ig) | 176 | 23,5 |
| entionisiertes Wasser | | 1200 |

Beispiel 7

Der Mischung aus entwässertem Polyesterol, DMPA, 1,4-Butandiol, Aceton I und Katalysator wurde das TDI zugegeben. Nach einer Stunde Reaktionszeit bei 65°C wurde das HDI zugesetzt und die Umsetzung weitere 90 min fortgesetzt. Nach Zulauf von Aceton II hatte die Reaktionsmischung einen NCO-Gehalt von 0,45 %.

Bei 50°C wurde mit PUD-Salz, das als 40 %ige Lösung in Wasser vorlag, kettenverlängert. Nach 5 Minuten wurde die Harzlösung, hergestellt aus Aceton III und Acrylat-Harz, zugesetzt und 5 Minuten bei 50°C gerührt. Anschließend wurde mit Wasser dispergiert und das Aceton abdestilliert.

| Ausgangsstoffe | | |
|---|---|---|
| | Molmenge [mmol] | Gew.-Teile [g] |
| Polyesterdiol ADS/B14 (OH-Z. = 45,0) | 192 | 477 |
| 1,4-Butandiol | 57 | 5,2 |
| DMPA | 31 | 4,2 |
| TDI | 177 | 30,8 |
| HDI | 177 | 29,7 |
| DBTL | | 0,1 |
| Aceton I | | 133 |
| | | |
| Aceton II | | 531 |
| PUD-Salz (40 %ig) | 73 | 31,9 |
| Acrylat-Harz aus 50 Gew.-% | | |
| n-Butylacrylat, 29 Gew.-% | | |
| Ethylhexylacrylat, 18,5 Gew.-% | | |
| Methylacrylat, 2,5 Gew.-% | | |
| Acrylsäure | | 240 |
| Aceton III | | 240 |
| entionisiertes Wasser | | 1200 |

Beispiel 8

Der Mischung aus entwässertem Polyesterol, 1,4-Butandiol, DMPA, Aceton I und Katalysator wurde das TDI zugegeben. Nach einer Stunde Reaktionszeit bei 65°C wurde das HDI zugesetzt und weitere 90 Minuten umgesetzt. Nach Zulauf von Aceton II hatte die Reaktionsmischung einen NCO-Gehalt von 0,65 %. Die Reaktionsmischung wurde auf 30°C abgekühlt und mit der Harzlösung, hergestellt aus Acrylat-Harz und Aceton III, vermischt. Anschließend wurde mit 30 %iger NaOH-Lösung neutralisiert, mit entionisiertem Wasser dispergiert und das Aceton abdestilliert.

| Ausgangsstoffe | | |
|---|---|---|
| | Molmenge [mmol] | Gew.-Teile [g] |
| Polyesterdiol ADS/B14 (OH-Z. = 45,0) | 168 | 419 |
| DMPA | 235 | 31,5 |
| 1,4-Butandiol | 50 | 4,5 |
| TDI | 267 | 4,5 |
| HDI | 267 | 44,9 |
| DBTL | | 0,1 |
| Aceton I | | 134 |
| | | |
| Aceton II | | 534 |
| Acrylat-Harz aus 50 Gew.-% | | |
| n-Butylacrylat, 29 Gew.-% | | |
| Ethylhexylacrylat, 18,5 Gew.-% | | |
| Methylacrylat, 2,5 Gew.-% | | |

(fortgesetzt)

| Ausgangsstoffe | | |
|---|---|---|
| | Molmenge [mmol] | Gew.-Teile [g] |
| Acrylsäure | | 240 |
| Aceton III | | 240 |
| NaOH-Lösung (30 %ig) | 176 | 23,5 |
| entionisiertes Wasser | | 1200 |

Tabelle

| | Feststoffgehalt [%] | LD-Wert | Viskosität [mPas x s] |
|---|---|---|---|
| Vergleichsbeisp. 1 | 40 | 87 | 146 |
| Vergleichsbeisp. 2 | 40 | 87 | 60 |
| Vergleichsbeisp. 3 | 40 | 74 | 91 |
| Beispiel 1 | 40 | 87 | 27 |
| Beispiel 2 | 40 | 93 | 16 |
| Beispiel 3 | 40 | 89 | 16 |
| Beispiel 4 | 40 | 96 | 18 |
| Beispiel 5 | 40 | 77 | 20 |
| Beispiel 6 | 40 | 91 | 17 |
| Beispiel 7 | 40 | 90 | 19 |
| Beispiel 8 | 40 | 93 | 17 |

## Patentansprüche

**1.** Wäßrige Dispersionen, enthaltend ein Polyurethan und 5 bis 60 Gew.-%, bezogen auf das Polyurethan eines die Haftung verbessernden Polymeren, wobei das Polyurethan aufgebaut ist aus

(a) organischen Polyisocyanaten

(b) Dihydroxylverbindungen mit einem Molekulargewicht über 500 bis 5000 g/mol, welche keine anionische Gruppen oder in anionische Gruppen überführbare Gruppen enthalten

(c) Di- oder Monohydroxylverbindungen mit mindestens einer anionischen Gruppe oder in eine anionische Gruppe überführbaren Gruppe

(d) gegebenenfalls weiteren von (c) verschiedenen Verbindungen mit ein oder zwei gegenüber Isocyanat reaktiven funktionellen Gruppen und mindestens einer anionischen oder in eine anionische Gruppe überführbaren Gruppe

(e) gegebenenfalls Verbindungen mit mindestens zwei gegenüber Isocyanat reaktiven funktionellen Gruppen und einem Molgewicht von 60 bis 500 g/mol, welche keine anionische oder in anionische Gruppen überführbare Gruppen enthalten

und das Polyurethan oder dessen Prepolymer in einem unter 100°C siedenden, mit Wasser mischbaren Lösungsmittel hergestellt und nach Zusatz eines die Haftung verbessernden Polymeren, ausgewählt aus der Gruppe Phenol-Formaldehyd-Kondensationsharze, Epoxidharze, Polyvinylacetat, Polyvinylchlorid, Polymethylmethacrylat, Polyamide, Polyether, Polyester, Polyetherdiole, Polyesterdiole, Polyurethane und Phenacrylat in Wasser dispergiert wird und im Falle des Prepolymeren anschließend die weitere Umsetzung zum Polyurethan erfolgt.

2. Verfahren zur Herstellung von wäßrigen Dispersionen gemäß Anspruch 1, dadurch gekennzeichnet, daß das Polyurethan, bzw. dessen Prepolymer in einem unter 100°C siedenden, mit Wasser mischbaren Lösungsmittel hergestellt und nach Zusatz des in Haftung verbessernden Polymeren in Wasser dispergiert wird und im Falle des Prepolymeren anschließend die weitere Umsetzung zum Polyurethan erfolgt.

3. Wäßrige Dispersionen gemäß Anspruch 1, wobei es sich beim die Haftung verbessernden Polymeren um ein Phenol-Formaldehyd Harz oder ein Epoxidharz handelt.

4. Verwendung der Dispersionen nach Anspruch 1 als Klebstoffe.

5. Mit Klebstoff beschichtete Substrate, erhältlich unter Verwendung einer Dispersion nach Anspruch 1.

## Claims

1. An aqueous dispersion containing a polyurethane and from 5 to 60% by weight, based on the polyurethane, of an adhesion-improving polymer, wherein the polyurethane is composed of

   (a) organic polyisocyanates
   (b) dihydroxy compounds which have a molecular weight of from more than 500 to 5000 g/mol and contain no anionic groups or groups convertible into anionic groups
   (c) di- or monohydroxy compounds having at least one anionic group or group convertible into an anionic group
   (d) if required, further compounds which differ from (c) and have one or two functional groups reactive to isocyanate and at least one anionic group or group convertible into an anionic group
   (e) if required, compounds having at least two functional groups reactive to isocyanate and a molecular weight of from 60 to 500 g/mol, which contain no anionic groups or groups convertible into anionic groups,

   and the polyurethane or its prepolymer is prepared in a water-miscible solvent boiling below 100°C and is dispersed in water after the addition of an adhesion-improving polymer selected from the group consisting of phenol/formaldehyde condensation resins, epoxy resins, polyvinyl acetate, polyvinyl chloride, polymethyl methacrylate, polyamides, polyethers, polyesters, polyetherdiols, polyesterdiols, polyurethanes and phenacrylate, and, in the case of the prepolymer, the further conversion to the polyurethane is then carried out.

2. A process for the preparation of an aqueous dispersion as claimed in claim 1, wherein the polyurethane or its prepolymer is prepared in a water-miscible solvent boiling below 100°C and is dispersed in water after the addition of the adhesion-improving polymer, and, in the case of the prepolymer, the further conversion to the polyurethane is then carried out.

3. An aqueous dispersion as claimed in claim 1, wherein the adhesion-improving polymer is a phenol/formaldehyde resin or an epoxy resin.

4. Use of a dispersion as claimed in claim 1 as an adhesive.

5. An adhesive-coated substrate obtainable using a dispersion as claimed in claim 1.

## Revendications

1. Dispersions aqueuses, qui contiennent un polyuréthanne et de 5 à 60%; par rapport au polyuréthanne, d'un polymère améliorant l'adhésivité, où le polyuréthanne est constitué

   (a) de polyisocyanates organiques
   (b) de composés dihydroxylés, d'un poids moléculaire supérieur à 500 allant jusqu'à 5000 g/mole, qui ne contiennent pas de radicaux anioniques ni de radicaux convertibles en radicaux anioniques,
   (c) de composés dihydroxylés ou monohydroxylés avec au moins un groupe anionique ou un groupe convertible en groupe anionique,
   (d) éventuellement d'autres composés qui diffèrent de (c), avec un ou deux radicaux fonctionnels réactifs sur l'isocyanate et au moins un groupe anionique ou au moins un groupe convertible en groupe anionique,

(e) éventuellement des composés avec au moins deux radicaux fonctionnels réactifs sur l'isocyanate et possédant un poids moléculaire de 60 à 500 g/mole, qui ne contiennent pas de radicaux anioniques ni de radicaux convertibles en radicaux anioniques,

et on prépare le polyuréthanne, ou son prépolymère, dans un solvant miscible à l'eau et bouillant en dessous de 100°C et, après l'addition d'un polymère améliorant l'adhésivité, choisi dans le groupe formé par les résines de condensation de phénol et de formaldéhyde, les résines époxydes, le poly(acétate de vinyle), le poly(chlorure de vinyle), le poly(méthacrylate de méthyle), les polyamides, les polyéthers, les polyesters, les polyétherdioles, les polyesterdioles, les polyuréthannes et le phénacrylate, et on le disperse dans de l'eau et, dans le cas du prépolymère, on poursuit ensuite la conversion en polyuréthanne.

**2.** Préparation de dispersions aqueuses suivant la revendication 1, caractérisé en ce que l'on prépare le polyuréthanne ou son prépolymère, dans un solvant miscible à l'eau et bouillant en dessous de 100°C et, après l'addition du polymère améliorant l'adhésivité, on le disperse dans de l'eau et, dans le cas du prépolymère, on poursuit ensuite la conversion en polyuréthanne.

**3.** Dispersions aqueuses suivant le revendication 1, où il s'agit, dans le cas du polymère améliorant l'adhésivité, d'une résine de phénol-formaldéhyde ou d'une résine époxyde.

**4.** Utilisation des dispersions suivant la revendication 1 à titre de colles.

**5.** Supports revêtus de colle, que l'on peut obtenir en utilisant une dispersion suivant la revendication 1.